# EUROPEAN PATENT SPECIFICATION

(11) **EP 3 626 517 B1**
(45) Date of publication and mention of the grant of the patent: **01.12.2021**
(21) Application number: 18382675.9
(22) Date of filing: 19.09.2018
(51) Int. Cl.: B60N 2/28, B60N 2/90

(54) **CHILD CAR SEAT STRUCTURAL ELEMENT AND MULTI-GROUP CHILD CAR SEAT**
KINDERSITZSTRUKTURELEMENT UND MEHRGRUPPENKINDERAUTOSITZ
ÉLÉMENT DE STRUCTURE DE SIÈGE AUTO POUR ENFANT ET SIÈGE AUTO POUR ENFANT MULTIGROUPE

(43) Date of publication of application: 25.03.2020
(73) Proprietor: Textia Innovative Solutions, S.L., 48160 Derlo, Vizcaya (ES)
(72) Inventor: BELLOSO LINACISORO, Aitor Josu, 48160 Derio, Vizcaya (ES); GARRIDO DÍEZ, Mikel, 48014 Bilbao, Vizcaya (ES)
(74) Representative: Balder IP Law, S.L.

(56) References cited:
- DE-A1- 3 917 992
- DE-C1- 10 156 621
- US-A- 5 154 185

## Description

### TECHNICAL FIELD

The present invention relates to child restraint systems (CRS) or child car seats for transporting children in a car, which are intended to be used on the passenger seat of a car. In the present disclosure, the term child car seat will generally be used.

More specifically, it relates to child car seats which are adapted to receive any child between 0 and 12 years of age (belonging to group 0 to group III), adaptable to consider the change (in size and weight) of the child over the years.

### STATE OF THE ART

There are many different types of child car seats available in the market today. These child car seats are divided into categories, according to the weight of the children for whom they are suitable. As a general rule, all children under 36 kg (79 Ibs) in weight or 1.35 m in height must use a child car seat. Each country has specific regulations. In Europe, child car seats must meet EU standards UN ECE Regulation 44. According to this regulation, child restraint systems fall into five "mass groups":
- Group 0 for children of a mass less than 10 kg;
- Group 0+ for children of a mass less than 13 kg;
- Group I for children of mass from 9 kg to 18 kg;
- Group II for children of mass from 15 kg to 25 kg;
- Group III for children of mass from 22 kg to 36 kg.

In general, these categories usually correspond to different age groups, but as just noted, it is the weight of the child that is most important when deciding what type of child seat to use. For instance, child car seats that are designed to keep the child facing rearwards are intended for use until the child is at least 15 months old.

Within a specific age group, some child car seats can be adjustable, in order to adapt to the size of the child. For example, in the case of a harness with shoulder straps, the seat can have several positions for fastening the harness, so as to adapt to the size of the child. Also, the back part of the car seat is in some cases adjustable in height, and so can be the headrest.

Also, some child car seats cover more than one group and are adjusted as the child grows; they may be called combination seats, extended seats or multi-group seats. However, there is no child car seat that covers all groups 0-III.

Generally, child car seats are usually large and heavy. This is a problem both in terms of limiting the space in the car for other passengers, and in terms of the portability between different cars.

Some solutions have aimed at reducing the car seat size and weight, by using inflatable solutions. One example can be found in the child car seat Luftikid^{®}. However, these solutions may pose technical difficulties -such as maintaining inflation at different pressures, or the use of 5-point harness-, which make them unsuitable for their homologation.

There are several car seat manufacturers offering car seats which are foldable for their ease of storage and transportation; one example is the booster hifold^{®}. These car seats just cover groups II and III, leaving groups 0 and I unattended.

Also, as previously explained, child car seats are sometimes adjustable to adapt to the child's size changes. However, they are poorly adaptable in form so as to adapt to the specific morphology of certain children (for instance, disabled children, children having brittle bones, etc.), which may require such morphologic adaptation of the car seat.

On the other hand, patent document WO 2011/079865 A1 discloses a fitting element with controlled stiffness, which comprises a gas tight envelope enclosing a plurality of layers. Each layer is made of a core made of a flexible material with high Young modulus and coated on both sides with a cover layer made of a material with high friction coefficient. Under atmospheric pressure, the layers inside the envelope are not compressed and the fitting element is in a flexible state; when a negative pressure is applied, the layers are compressed against each other, thereby changing the rigidity of the body fitting element, which becomes stiff.

Therefore, there is a need for a child car seat which is versatile adaptable to different age groups, more specifically, to all age groups, as well as light in weight and occupies little space when not in use.

Patent document DE 10156621 C1 discloses a child seat, for automobile or aircraft, that has foam-filled inflatable cushioning elements which allow fitting to each child. The child seat has a seat frame or seat shell supporting at least one cushioning element with an outer envelope of an air- and water-tight material, inflated via a valve.

### DESCRIPTION OF THE INVENTION

The present disclosure intends to solve the shortcomings of prior-art child car seats by providing an evolving structural element for a child car seat. Due to the specific features of this structural element, the child car seat having this structural element covers all ages group, from group 0 to group III.

A first aspect of the invention relates to a structural element for a multi-group child car seat, the structural element comprising:
- a first portion, for constituting a back part of a child car seat for a first child car seat group, or for constituting a seat part of a child car seat for a second car seat group; and
- a second portion, for constituting a back part of a child car seat for the second child car seat group, or for constituting a seat part of a child car seat for the first child car seat group;
- the first portion and the second portion comprising a gas tight envelope enclosing a plurality of layers, the gas tight envelope being in a flexible state under atmospheric pressure, and in a second rigid state when a negative pressure is applied therein; and
- the first portion and the second portion comprising through holes configured for straps of a belt harness.

According to the invention, when the first portion is configured to constitute a back part of the child car seat for the first child car seat group, the second portion is configured to constitute a seat part of the child car seat for the first child car seat group (this first child car seat group usually covering groups 0-I); and when the second portion is configured to constitute a back part of the child car seat for the second child car seat group, the first portion is configured to constitute a seat part of the child car seat for the second child car seat group (this second child car seat group usually covering groups II-III).

By providing this structural element comprising the gas tight envelope which may be reversibly switch between a flexible state and a rigid state, the first portion and second portion of the structural element can be used as seat and/or back portions of a seat depending on the needs of the corresponding child car seat user.

In the flexible state, the layers inside the gas tight envelope of the first and second portions are not compressed and the structural element can be shaped to any specific desired shape; for instance, this desired shape can be made to conform to the shape of a disabled child; once the structural element has the desired shape, negative pressure is applied and the structural element becomes rigid in that specific shape, thereby providing a rigid structural element adapted to the specific child's needs.

Also, in the flexible state, the first and second portions can be folded away, therefore occupying little space.

In the rigid state, the structural element is stiff, but it is mouldable upon exertion of a considerable pressure; thus, the structural element is capable of absorbing part of the energy of a car impact.

In some embodiments the first portion comprises a first gas tight envelope and the second portion comprise a second gas tight envelope, the first and the second gas tight envelopes being separate envelopes. So, in case one of the first portion of the second portion is damaged or becomes worn, having separate elements makes it possible to replace just the damaged portion, thereby reducing maintenance tasks and saving costs. Additionally, this configuration enables choosing the same or different materials for the plurality of layers inside each gas tight envelope; this may prove helpful if different stiffness requirements need to be present in each portion, for instance, due to the different sizes of the first and second portions.

The first portion and the second portion may be connected to each other, for instance, by means of a middle portion. This middle portion may be made of any material, thereby reducing manufacturing cost. They middle portion may comprise a single strap connecting the first and the second portions, or it may comprise two or more straps. In some embodiments the middle portion is made of any plastic material, such as the plastic material of the gas tight envelope of the first portion and/or of the second portion. When the middle portion is made of the same plastic material of the gas tight envelope, the gas tight envelope of the first portion, of the second portion and of the middle portion can be made as a one-piece gas tight envelope, which may simplify the manufacturing process. Then, as already mentioned, the first gas tight envelope of the first portion and the second gas tight envelope of the second portion may comprise the same or different number of layers, and the layers having the same or different materials. In fact, each gas tight envelope may comprise layers of a same material and structure, or layers of the plurality of layers inside each gas tight envelope may be made of different materials and have different structures.

In some other embodiments, the first portion and second portion may comprise a same gas tight envelope; that is, the structural element for the multi-group child car seat is made in one piece. This configuration simplifies the manufacturing process.

In some embodiments the second portion is larger than the first portion. When the second portion is made bigger than the first portion, depending on the dimensions of the second portion, it may be necessary to fold the second portion once, twice or even more times to configure the seat part of the child car seat for the first child car seat group (which usually covers groups 0-I).

In some embodiments, at least one layer of the plurality of layers of the first portion and at least one layer of the plurality of layers of the second portion comprise one or more slits; usually, all layers of the plurality of layers comprise slits one or more slits. These slits facilitate folding of the structural element. If appropriately distributed over the structural element, these slits may also enable that the structural element adopts a specific preformed shape upon application of a negative pressure.

In some embodiments said one or more slits extend, in a position of use of the structural element, in a vertical direction, thereby constituting vertical folding lines for enabling the formation of one or more lugs.

In some embodiments said one or more slits extend, in a position of use of the structural element, in a horizontal direction, constituting one or more horizontal folding lines for horizontally folding portions of the structural element. These horizonal folding lines enable the second portion to be folded once, twice or more times along those one or more horizontal folding lines, so as to conform the child car seat for the first car seat group.

When the structural element is made in one piece, these horizonal folding lines enable that the first portion be bent along the horizontal folding line with respect to the second portion, forming an angle which can be have preferred specific values, to conform to a child car seat for the first or the second child car seat group.

These horizonal folding lines may also facilitate that the structural element be folded away, for transport or storage.

In some embodiments, the structural element may also further comprise one or more indentations, usually extending inwardly in opposite parts of the first and the second portions. These indentations also facilitate folding of the structural element, also enabling that the structural element adopts a specific preformed shape upon application of a negative pressure. In some embodiments, the indentations extend vertically in a position of use of the structural element.

A structural element may comprise several slits extending in the horizontal and/or the vertical directions. The structural may additionally comprise indentations. When vertically disposed, the slits and indentations may be in even number, and symmetrically distributed with respect to a symmetry axis of the structural element.

In some embodiments, one or more layers of the plurality of layers inside the gas tight envelope can be made of a single material, they can be made of a matrix reinforced with fibers or the layers can comprise a core layer with a coating (on one side or on both sides of the core).

In some embodiments, one or more layers of the plurality of layers are made of thermoplastic polyurethane elastomer (PET) sheets fully coated with a thermoplastic polyurethane (TPU) coating; this results in layers having high friction and low tackiness properties.

In some embodiments, one or more layers of the plurality of layers comprise one or more of the following or combinations thereof: low-density polyethylene (LDPE), very low-density polyethylene (VLDPE) and cyclic olefin copolymer (COC).

The number of layers inside the gas tight envelope can be any suitable number depending on the specific application. In some embodiments of the present invention the number of layers range between 5 and 30, more preferably between 10 and 20.

In some embodiments, the structural element further comprises coupling means for coupling to a frame of a child car seat. This way, the structural element according to the present invention is readily usable in combination with the frame as a child car seat, specifically a multi-group car child seat.

The present invention also relates to a multi-group child car seat, which comprises:
- a frame, couplable to a seat of a vehicle; and
- a child car seat structure as previously defined according to any preceding aspect or embodiments.

In some embodiments the frame is foldable. Since in the flexible state of the structural element the first and second portions can be folded away, the multi-group car seat can be fully folded. The resulting child car seat, which can be installed and uninstalled in a relatively quick and simple manner, provides a solution for the public transportation service (such as taxis or buses or airplanes), wherein carrying a standard non-foldable child car seat is not feasible.

The frame of the child car seat may comprise fasteners for fastening the frame to a seat of a vehicle. These fasteners may comprise Isofix^{®} attachments, or clutches for holding a safety belt of car.

In some embodiments the multi-group child car seat further comprises a cover to be placed on the structural element; the cover is adapted to be used in a child car seat, and to adapt to the shape of a child. The cover may comprise a fabric, preferably padded, or a cushion; the cover may be textile, or inflatable, etc.

In some embodiments, the child car seat structure is shaped to conform a back part and a seat part of a child car seat for the first or the second child car seat group.

The multi-group child car seat may further comprise a pneumatic kit including pneumatic component (such as pump, a set of electro-valves, and/or pressure sensors) and processing means (such as a microprocessor, a chip, etc.), the processing means being configured to operate the pneumatic component so as to switch the child car seat structure between the first flexible state and the second rigid state and vice versa.

In some embodiments, the child car seat structure has a first preformed shape conforming to a child car seat for the first child car seat group and a second preformed shape conforming to a child car seat for the second child car seat group.

The different aspects and embodiments of the invention defined in the foregoing can be combined with one another, as long as they are compatible with each other.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a schematic top plan view of a multi-group child car seat structure, in an expanded position, according to a first possible embodiment of the invention.
Figure 2 shows a schematic top plan view of a multi-group child car seat structure, in an expanded position, according to a second possible embodiment of the invention.
Figure 3 shows a schematic perspective view of the multi-group child car seat structure of any of Figures 1 or 2, partially folded to form part of a group 0-I child car seat.
Figures 4 shows a schematic perspective view of the multi-group child car seat structure of Figure 2, in a more advanced folding stage to conform to a group 0-I child car seat.
Figures 5 & 6 show schematic perspective views of the multi-group child car seat structure any of Figures 1 or 2, in two folding stages to conform to a group II-III child car seat.
Figures 7 and 8 show perspective views of a multi-group child car seat, in its group 0-I and group II-III positions, respectively.
Figure 9 shows a perspective view of a completely folded multi-group child car seat.
Figures 10-14 show a multi-group child car seat according to a possible embodiment of the invention, the multi-group child car seat being in a fully folded position in Figure 5. The frame of the multi-group child car seat has been sequentially expanded until the position shown in Figure 14, in which the frame has been completely deployed for forming a group 0-I car seat.
Figure 15 shows another possible embodiment of a multi-group child car seat in a deployed position, similar to the deployed position of Figure 9.
Figure 16 is an enlarged view of the locking system of the retractable anti-tipping bar.
Figure 17 is a front perspective view of the multi-group child car seat of Figures 4-8, in which the structural element is also in a deployed position.
Figure 18 is a rear perspective view of the multi-group child car seat of Figures 10-14 & 17.
Figure 19 is a side view of the multi-group child car seat of Figures 10-14, including details of the coupling between the multi-group child car seat structure and the frame.
Figure 20 is a cross-section of an enlarged view of how the multi-group child car seat structure is coupled to the frame.
Figure 21 & 22 are side and perspective views, respectively, of a multi-group child car seat according to a possible embodiment of the invention, the multi-group child car seat being completely deployed for forming a group II-III car seat.

### DESCRIPTION OF PREFERRED EMBODIMENTS

The following description is not to be taken in a limiting sense but is given solely for the purpose of describing the broad principles of the invention. Next embodiments of the invention will be described by way of example, with reference to the above-mentioned drawings.

The present invention and the embodiments shown in the Figures are particularly suitable for a multi-group child car seat.

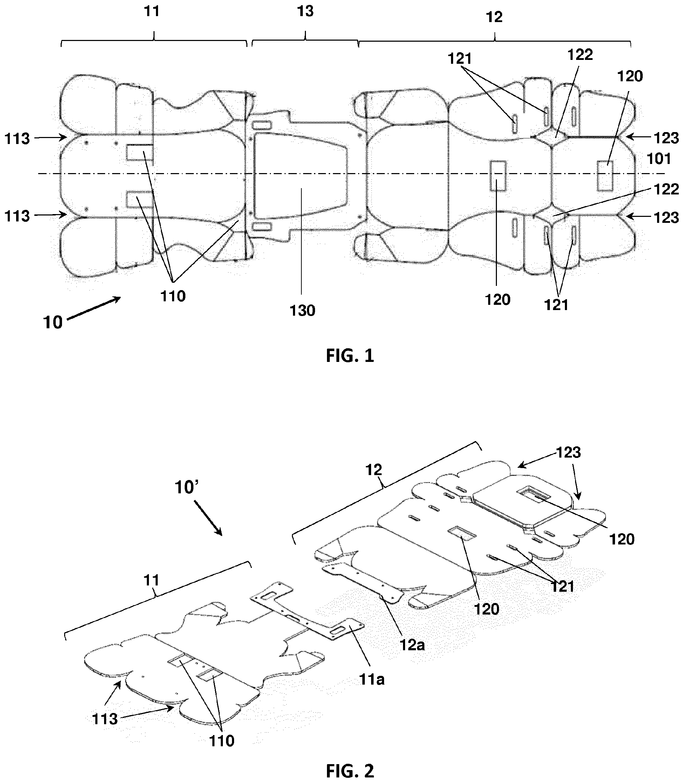

Figure 1 shows a schematic top plan view of a multi-group child car seat structure 10, in an expanded position. The multi-group child car seat structure 10 essentially consists of a laminar element, which comprises a gas tight envelope. The gas tight envelope encloses several layers (not shown in the drawings).

The gas tight envelope also comprises a valve or similar (not shown in the figures) for controlling the pressure inside the envelope. This valve is a non-return safety valve (or similar) that prevents that the vacuum conditions from being accidentally removed, in case of an impact or an undesirable manipulation of the child. The multi-group child car seat structure 10 has a flexible state under atmospheric pressure, in which the layers are not compressed against each other and they can be adapted to any desired shape; and a second rigid state when a negative pressure is applied, in which the layers are pressed against each other and the multi-group child car seat structure 10 becomes stiff.

In the examples that follow, the gas tight envelope is made of a thermoplastic material. Other materials are also possible.

As shown in Figure 1, the multi-group child car seat structure 10 comprises a first portion 11 and a second portion 12. The first portion 11 and the second portion are connected by a middle portion 13. The middle portion 13 has a big hole 130 in its central portion, thereby saving material. By means of the middle portion 13 the child car seat structure 10 can be fastened to a base 50 (usually a metallic plate) of a frame 500 of a child car seat, for instance by means of screws. For this purpose, the flap elements 11a, 12a each has several precast circular holes. This middle portion 13 is made of the same thermoplastic material as the gas tight envelope.

Figure 2 shows another possible embodiment of a multi-group child car seat structure 10', also comprising a first portion 11 and a second portion 12, each comprising a separate gas tight envelope, the number and constitution of layers inside one gas tight envelope can be the same or different to the other gas tight envelope. In this specific embodiment, both the first portion 11 and the second portion 12 have respective flap elements 11a, 12a. This flap elements 11a, 12a, are extensions of the respective gas tight envelopes, and are intended to be fixed to a base 50 of a frame 500 of a child car seat. For instance, the flap elements 11a, 12a can be fastened to the base 50 (usually a metallic plate) by means of screws. For this purpose, the flap elements 11a, 12a each has several precast circular holes.

Other known means for fastening the child car seat structure 10 to the base 50 are possible, regardless of the one-piece of two-piece configuration of the child car seat structure 10, such as hook-and-loop fasteners, adhesive layers or nuts and bolts. In order to improve the fixation of the child car seat structure 10 to the base 50, a metallic plate (not shown) can be fixed on top of the middle portion 13 or the flap elements 11a, 12a, reproducing a sandwich structure (base - structure element - metallic plate).

In a specific configuration, the number of layers inside the gas tight envelope is 13. And all the layers inside the gas tight envelope are made of the same material, this material being PET coated with TPU.

In another example, the gas tight envelope has a multilayered configuration A/B/C/B/A, wherein layers A, B and C are made of the following materials:

| Layer A | Layer B | Layer C |
|---|---|---|
| LDPE - 410E (Dow^{®}) MFI = 2.0 g/10 min (190ºC, 2.16 kg) | LDPE- 410E (Dow^{®}) MFI = 2.0 g/10 min (190ºC, 2.16 kg) | COC 8007F-600 (Topas^{®}) |
| | | MVR = 2.0 g/10 min (190ºC, 2.16 kg) |
| VLDPE - Clearflex^{®} CL B0 (Versalis) MFI = 4.0 g/10 min (190ºC, 2.16 kg) | | |
| Mix proportion LDPE/VLDPE 90/10 | | |

| | | |
|---|---|---|
| *MFI=melt flow index; MVR=melt flow rate* | | |

The first portion 110 has two pairs of through holes 110. These holes 110 are intended for lodging and letting straps of a five-point harness belt to pass therethrough, and allow height adjustment (raising and lowering the harness) of the back portion. They are symmetrically disposed with respect to an axis 101 of symmetry of the multi-group child car seat structure 10.

Similarly, the second portion 12 has a pair of through holes 120, also intended for passing straps of a five-point harness belt therethrough, more specifically, the low strap of the harness comprising a crotch piece. Additionally, the second portion 12 also has several pairs of through holes 121, intended for passing straps of a three-point harness belt therethrough. Further, the second portion 12 also has another pair of through holes 122, for facilitating folding of the multi-group child car seat structure 10. All pairs of holes 120, 121, 123 are symmetrically disposed with respect to the axis 101 of symmetry.

According to the invention, the multi-group child car seat structure 10 covers all age groups 0 to III.

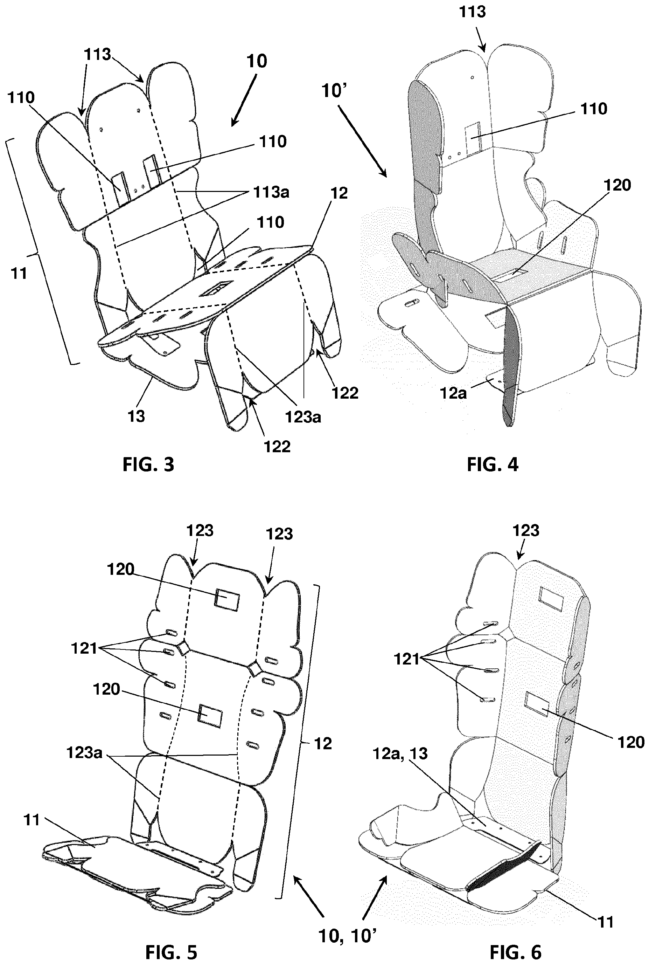

Indeed, as shown in Figures 3 and 4, the multi-group child car seat structure 10 of Figure 1 has been folded to form part of a group 0-I child car seat as follows: the first portion 11 constitutes a back part of the group 0-I child car seat, and the second portion 12 has been folded to constitute a seat part of the group 0-I child car seat. As more clearly shown in Figure 4, in this case the second portion 12 has been folded twice (adopting a shape similar to a triangular prism), so as to constitute the seat part of the group 0-I child car seat.

In Figures 5 and 6, the multi-group child car seat structure 10 of Figure 1 has been folded to form part of a group II-III child car seat as follows: the second portion 12 constitutes a back part of the group II-III child car seat, while the first portion 11 constitutes a seat part of the group II-III child car seat.

Both the first portion 11 and the second portion 12 have respective indentations 113, 123, which extend inwardly in opposite sides of the first and second portions 11, 12. These vertical indentations facilitate folding of the structural element, and enable that the structural element adopts a specific preformed shape upon application of a negative pressure.

Vertical dotted lines 113a and 123a represent vertical slits, which are actually not externally visible (unless the gas tight envelope were made of a transparent or translucid material). These vertical slits 113a, 123a have been made in one or more of the layers of the first portion 11 and in one more of the layers of the second portion 12; the gas tight envelope does not have any corresponding vertical slit. These vertical slits constitute vertical folding lines for enabling the formation of one or more lugs, or for folding the back part (of the first portion 11 or of the second portion 12) to adapt to the child's shape and size. Actually, in Figures 4 and 6 use of these vertical folding lines has been made of.

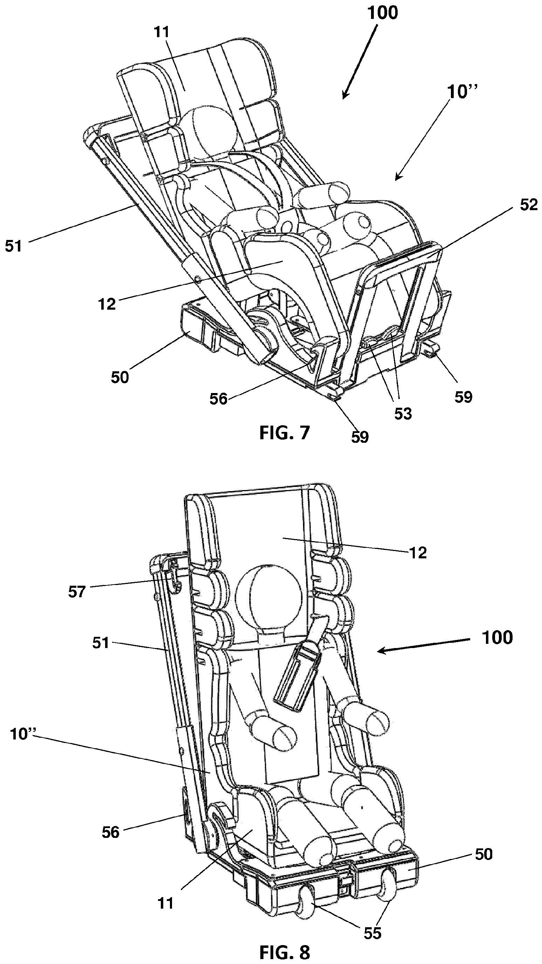

Figure 7 shows a perspective view of a multi-group child car seat 100, assembled in its group 0-1 position. And Figure 8 shows a perspective view of the same multi-group child car seat 100, assembled in its group II-III position.

As can be seen in Figure 8, the multi-group child car seat 100 comprises a one-piece child car seat structure 10". This one-piece child car seat structure 10" also has a first portion 11 and a second portion 12. In this embodiment, the second portion 12 is smaller than the second portion 12 of the previous child car seat structures 10, 10' and the second portion 12 has only been bent once to constitute the seat part of the group 0-I child car seat.

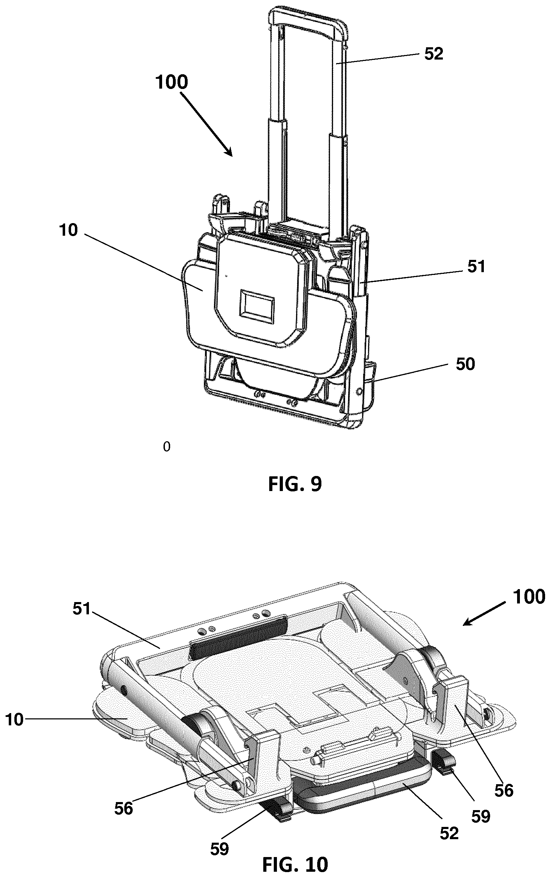

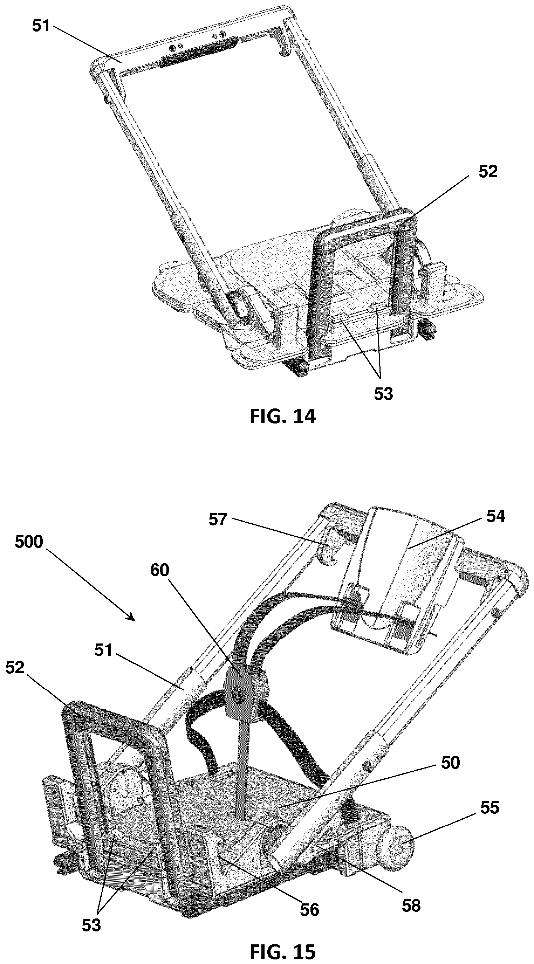

The sequence shown in Figures 10-14 represent a multi-group child car seat 100, starting from a fully folded position in Figure 10 (suitable for storage and transport) to the position shown in Figure 14, in which the frame 500 has been completely deployed for forming a group 0-I car seat, together with the corresponding multi-group child car seat structure. For clarity purposes the multi-group child car structure has been removed from Fig. 10.

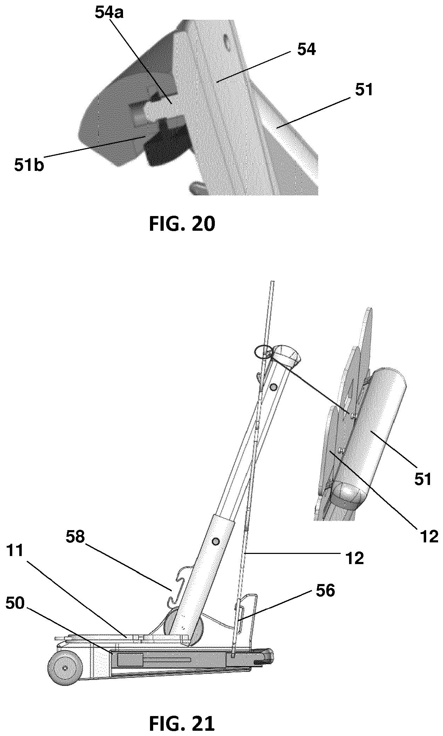

The multi-group child car seat 100 comprises a foldable or collapsible frame 500. The frame 500 has a first U-shaped bar 51, which is retractable and pivotable around a pivot axis 511. This first U-shaped bar 51 may be positioned in a first fold-away position (shown in Figures 10-12); in a second group 0-I position (shown in Figures 14, 15 and 17-19), in which the first U-shaped bar 51 adopts a first angle with respect to the base 50 of the frame 500; and in a third group II-III position (shown in Figures 21-22), in which the first U-shaped bar 51 adopts a second angle with respect to the base 50 of the frame 500.

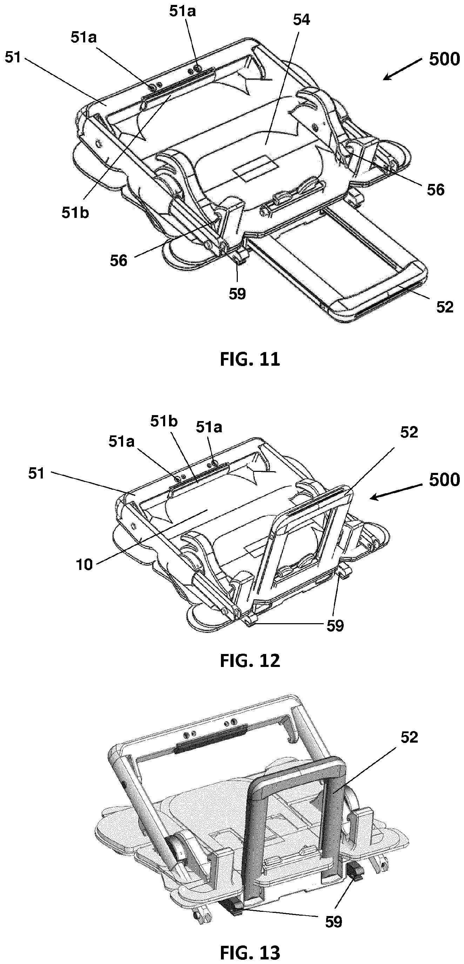

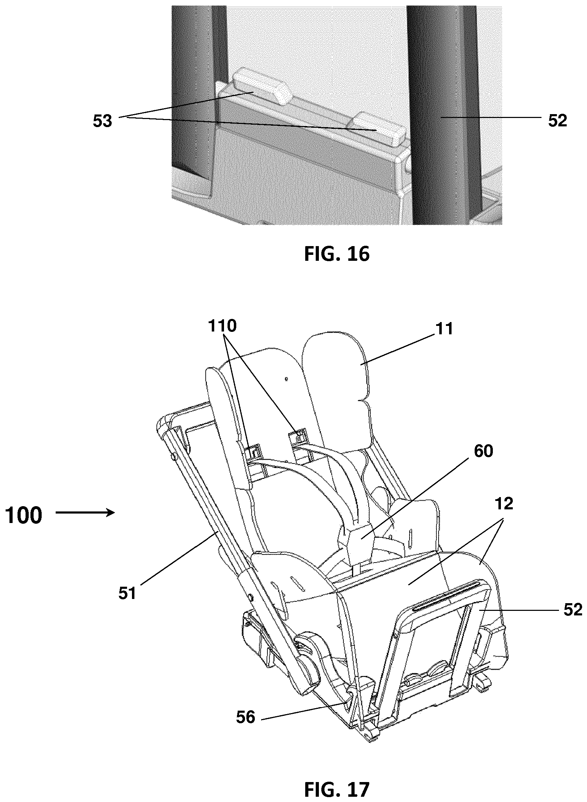

The frame 500 also has a second U-shaped bar 52, which is also retractable and pivotable. In Figure 16, the second U-shaped bar 52 is in its retracted position. In Figure 11 this second U-shaped bar 52 has been extended, while in Figure 12 it has been pivoted to its anti-tipping position to form an anti-tipping bar for group 0-I, which is intended to face the back portion of seat of a car (when in group 0-I, the child car seat is facing rearwards). Once the second U-shaped bar 52 is in its anti-tipping position, this position can be locked by outwardly moving two latches 53 (see Figure 16), whereby their respective fingers engage corresponding holes in the second U-shaped bar 52, thereby locking this position. The anti-tipping position can be released by inwardly moving the two latches 53.

In the position shown in Figure 11, the second U-shaped bar 52 can be used as a grip for transporting the multi-group child car seat 100.

The sequence shows how the first U-shaped bar 51 is first pivoted (Figure 13) and then extended (Figure 14) to its second group 0-I position, for accommodating a multi-group child car seat structure 10, 10' or 10" (as shown in Figure 17). The extension and pivoting of the first and second U-shaped bars can be carried out in a different order arriving at the same configuration shown in Figure 14.

As readily apparent from several figures (for instance, in Figures 7, 10-13), the frame 50 of the child car seat comprises Isofix^{®} attachments 59 for fastening the frame 50 to a seat of a vehicle.

Also, as shown in several figures (for instance Figures 8, 11 or 15), the frame 500 comprises wheels 55. For clarity purposes, in some other figures the wheels 55 have not been represented.

Figure 15 shows the frame 500 of the multi-group child car seat 100 (again, for clarity, the multi-group child car seat structure 10 has been omitted in the drawings). This Figure 15 shows a five-point harness 60, and how it is fastened to the frame 500 by means of a support element 54. This support element 54 also act as connection means of the multi-group child car seat structure 10 to the frame and it also allows height regulation of the shoulder straps of the five-point harness 60.

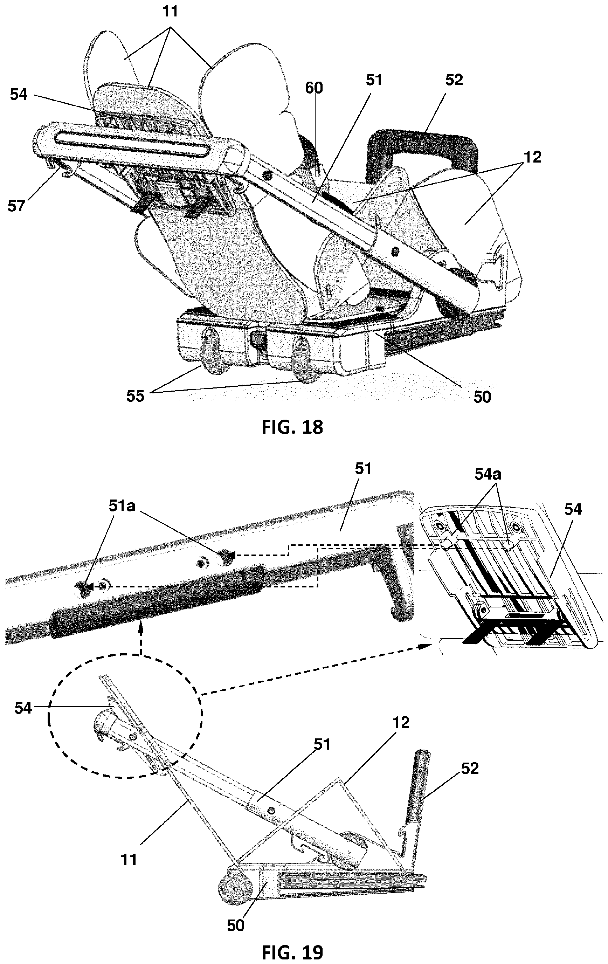

Figures 17 and 18 show front and rear perspective views, respectively, of the multi-group child car seat 100 of Figures 10-16, in which the multi-group child car seat structure 10 is mounted on the frame 500 in a group 0-I position. Please note that, for easiness and clarity of the drawings, a cover which is placed on the multi-group child car seat structure 10 and shaped to receive a child has been omitted.

The frame 500 further comprises clutches 56, 57 and 58 for coupling the frame 500 to a seat of a vehicle. These clutches 56, 57, 58 are configured to receive a fastening belt of the seat of the vehicle. These clutches can be more clearly seen in Figures 17, 18 or 19.

Figure 19 is a schematic side view of the multi-group child car seat 100. It further reflects how the first portion 11 of the multi-group child car seat structure 10 (which constitutes the back portion of the seat in the group 0-I) is coupled to the frame 500. The support element 54 (cf. Figure 16) includes two protrusions 54a, which are to be coupled means to respective two holes 51a in the first U-shaped bar 51; these two protrusions 54a are snap-fitted into a push member 51b of the first U-shaped bar 51 (see Figure 20).

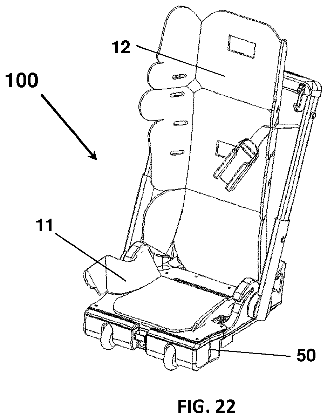

Figure 21 and 22 are side and perspective views, respectively, of the multi-group child car seat 100, forming a group II-III car seat.

Figure 21 includes an enlarged view of how the second portion 12 of the multi-group child car seat structure 10 (which constitutes the back portion of the seat of the group II-III) is coupled to the frame 500 by means of snap fasteners.

As shown in Figure 22, the second portion 12 constitutes the back part of the group II-III child car seat, while the first portion 11 constitutes the seat part of the group II-III child car seat.

It should be noted that the attached Figures are schematic representations and not CAD drawing for manufacturing. Thus, in some of the figures (particularly in Figures 13 and 14), one or more elements of the frame 50 seem to physically traverse the structural element 10, but this is just to be considered as a mere drawing issue.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Structural element (10) for a multi-group child car seat (100), the structural element (10) comprising:
- a first portion (11), for constituting a back part of a child car seat for a first child car seat group, or for constituting a seat part of a child car seat for a second car seat group; and
- a second portion (12), for constituting a back part of the child car seat for the second child car seat group, or for constituting a seat part of the child car seat for the first child car seat group;
- the first portion (11) and the second portion (12) comprising a gas tight envelope; **characterised in that**
the gas tight envelope encloses a plurality of layers, the gas tight envelope being in a first flexible state under atmospheric pressure, and in a second rigid state when a negative pressure is applied; and
- the first portion (11) and the second portion (12) comprising through holes (110; 120, 121) configured for straps of a belt harness (60).

2. Structural element (10) according to claim 1, wherein the first portion (11) comprises a first gas tight envelope and the second portion (12) comprises a second gas tight envelope.

3. Structural element (10) according to any preceding claim, wherein the first portion (11) and the second portion (12) are connected to each other by means of a middle portion (13).

4. Structural element (10) according to claim 1, wherein the first portion (11) and second portion (12) comprise a same gas tight envelope.

5. Structural element (10) according to any preceding claim, wherein at least one layer of the plurality of layers of the first portion (11) and at least one layer of the plurality of layers of the second portion (12) comprise slits.

6. Structural element (10) according to claim 5, wherein said slits extend, in a position of use of the structural element (10), in a vertical direction, constituting vertical folding lines for forming one or more lugs.

7. Structural element (10) according to any of claims 5-6, wherein said slits extend, in a position of use of the structural element (10), in a horizontal direction, constituting horizontal folding lines for horizontally folding portions of the structural element (10).

8. Structural element (10) according to any preceding claim, the structural element further comprising one or more indentations (113, 123) extending inwardly in opposite parts of the first and the second portions (11, 12).

9. Structural element (10) according to any preceding claim, wherein one or more layers of the plurality of layers inside the gas tight envelope are made of thermoplastic polyurethane elastomer (PET) sheets fully coated with a thermoplastic polyurethane (TPU) coating.

10. Structural element (10) according to any preceding claim, wherein one or more layers of the plurality of layers inside the gas tight envelope comprise one or more of the following or combinations thereof: low-density polyethylene (LDPE), very low-density polyethylene (VLDPE) and cyclic olefin copolymer (COC).

11. Structural element (10) according to any preceding claim, which further comprises coupling means for connecting to a frame (500) of a child car seat.

12. Multi-group child car seat (100), comprising:
- a frame (500), couplable to a seat of a vehicle;
wherein the multi-group child car seat (100) further comprises:
- a child car seat structure (10) according to any preceding claim.

13. Multi-group child car seat (100) according to claim 12, wherein the child car seat structure (10) is shaped to conform a back part and a seat part of a child car seat for the first or the second child car seat group.

14. Multi-group child car seat (100) according to any of claims 12-13, which further comprises a pneumatic kit including a pneumatic component and processing means, the processing means being configured to operate the pneumatic component so as to switch the child car seat structure (10) between the first flexible state and the second rigid state and vice versa.

15. Multi-group child car seat (100) according to any of claims 12-14, wherein the child car seat structure (10) has a first preformed shape conforming to a child car seat for the first child car seat group and a second preformed shape conforming to a child car seat for the second child car seat group.

## Patentansprüche

1. Strukturelement (10) für einen Mehrgruppenkinderautositz (100), wobei das Strukturelement (10) umfasst:
- einen ersten Abschnitt (11) zum Bilden eines Rückenteils eines Kinderautositzes für eine erste Kinderautositzgruppe, oder zum Bilden eines Sitzteils eines Kinderautositzes für eine zweite Autositzgruppe; und
- einen zweiten Abschnitt (12) zum Bilden eines Rückenteils des Kinderautositzes für die zweite Kinderautositzgruppe, oder zum Bilden eines Sitzteils des Kinderautositzes für die erste Kinderautositzgruppe;
- wobei der erste Abschnitt (11) und der zweite Abschnitt (12) eine gasdichte Umhüllung umfassen;
**dadurch gekennzeichnet, dass**
die gasdichte Umhüllung eine Vielzahl von Schichten umschließt, wobei die gasdichte Umhüllung unter atmosphärischem Druck in einem ersten flexiblen Zustand ist und in einem zweiten starren Zustand, wenn ein Unterdruck bewirkt wird; und
- der erste Abschnitt (11) und der zweite Abschnitt (12) Durchgangslöcher (110; 120, 121) umfassen, eingerichtet für Riemen eines Gurtgeschirrs (60).

2. Strukturelement (10) nach Anspruch 1, bei welchem der erste Abschnitt (11) eine erste gasdichte Umhüllung umfasst und der zweite Abschnitt (12) eine zweite gasdichte Umhüllung umfasst.

3. Strukturelement (10) nach einem der vorhergehenden Ansprüche, bei welchem der erste Abschnitt (11) und der zweite Abschnitt (12) durch einen Mittelabschnitt (13) miteinander verbunden sind.

4. Strukturelement (10) nach Anspruch 1, bei welchem der erste Abschnitt (11) und der zweite Abschnitt (12) eine gleiche gasdichte Umhüllung umfassen.

5. Strukturelement (10) nach einem der vorhergehenden Ansprüche, bei welchem mindestens eine Schicht der Vielzahl von Schichten des ersten Abschnitts (11) und mindestens eine Schicht der Vielzahl von Schichten des zweiten Abschnitts (12) Schlitze umfassen.

6. Strukturelement (10) nach Anspruch 5, bei welchem sich die Schlitze in einer Gebrauchsstellung des Strukturelements (10) in vertikaler Richtung erstrecken und vertikale Faltlinien zur Bildung einer oder mehrerer Laschen bilden.

7. Strukturelement (10) nach einem der Ansprüche 5 bis 6, bei welchem sich die Schlitze in einer Gebrauchsstellung des Strukturelements (10) in horizontaler Richtung erstrecken und horizontale Faltlinien zum horizontalen Falten von Abschnitten des Strukturelements (10) bilden.

8. Strukturelement (10) nach einem der vorhergehenden Ansprüche, wobei das Strukturelement ferner eine oder mehrere Vertiefungen (113, 123) umfasst, sich in gegenüberliegenden Teilen des ersten und des zweiten Abschnitts (11, 12) nach innen erstreckend.

9. Strukturelement (10) nach einem der vorhergehenden Ansprüche, bei welchem eine oder mehrere Schichten der Vielzahl von Schichten innerhalb der gasdichten Umhüllung aus thermoplastischen Polyurethan-Elastomer (PET)-Folien hergestellt sind, vollständig beschichtet mit einer thermoplastischen Polyurethan (TPU)-Beschichtung.

10. Strukturelement (10) nach einem der vorhergehenden Ansprüche, bei welchem eine oder mehrere Schichten der Vielzahl von Schichten innerhalb der gasdichten Umhüllung eine oder mehrere der folgenden oder Kombinationen davon umfassen: Polyethylen niedriger Dichte (LDPE), Polyethylen sehr niedriger Dichte (VLDPE) und cyclisches Olefin-Copolymer (COC).

11. Strukturelement (10) nach einem der vorhergehenden Ansprüche, welches ferner Kupplungsmittel zur Verbindung mit einem Rahmen (500) eines Kinderautositzes umfasst.

12. Mehrgruppenkinderautositz (100), umfassend:
einen Rahmen (500), koppelbar mit einem Sitz eines Fahrzeugs; bei welchem der Mehrgruppenkinderautositz (100) ferner umfasst:
eine Kinderautositzstruktur (10) nach einem der vorangehenden Ansprüche.

13. Mehrgruppenkinderautositz (100) nach Anspruch 12, bei welchem die Kinderautositzstruktur (10) ausgeformt ist, um einem Rückenteil und einem Sitzteil eines Kinderautositzes für die erste oder die zweite Kinderautositzgruppe zu entsprechen.

14. Mehrgruppenkinderautositz (100) nach einem der Ansprüche 12-13, ferner umfassend einen pneumatischen Bausatz aufweisend eine pneumatische Komponente und Verarbeitungsmittel, wobei die Verarbeitungsmittel eingerichtet sind, die pneumatische Komponente zu betätigen, um die Kinderautositzstruktur (10) zwischen dem ersten flexiblen Zustand und dem zweiten starren Zustand und umgekehrt zu schalten.

15. Mehrgruppenkinderautositz (100) nach einem der Ansprüche 12-14, bei welchem die Kinderautositzstruktur (10) eine erste vorgeformte Form aufweist, übereinstimmend mit einem Kinderautositz für die erste Kinderautositzgruppe, und eine zweite vorgeformte Form, übereinstimmend mit einem Kinderautositz für die zweite Kinderautositzgruppe.

## Revendications

1. Elément structurel (10) pour un siège auto pour enfant multi-groupe (100), l'élément structurel (10) comprenant :
- une première portion (11), pour constituer une partie de dossier d'un siège auto pour enfant pour un premier groupe de siège auto pour enfant, ou pour constituer une partie de siège d'un siège auto pour enfant pour un deuxième groupe de siège auto pour enfant ; et
- une deuxième portion (12), pour constituer une partie de dossier du siège auto pour enfant pour le deuxième groupe de siège auto pour enfant, ou pour constituer une partie de siège du siège auto pour enfant pour le premier groupe de siège auto pour enfant ;
- la première portion (11) et la deuxième portion (12) comprenant une enveloppe étanche au gaz ;
**caractérisé en ce que**
l'enveloppe étanche au gaz renferme une pluralité de couches, l'enveloppe étanche au gaz étant dans un premier état flexible sous pression atmosphérique, et dans un deuxième état rigide lorsqu'une pression négative est appliquée ; et
- la première portion (11) et la deuxième portion (12) comprenant des trous traversants (110 ; 120, 121) configurés pour des sangles d'un harnais de sécurité (60).

2. Elément structurel (10) selon la revendication 1, dans lequel la première portion (11) comprend une première enveloppe étanche au gaz et la deuxième portion (12) comprend une deuxième enveloppe étanche au gaz.

3. Elément structurel (10) selon l'une quelconque des revendications précédentes, dans lequel la première portion (11) et la deuxième portion (12) sont raccordées l'une à l'autre au moyen d'une portion médiane (13).

4. Elément structurel (10) selon la revendication 1, dans lequel la première portion (11) et la deuxième portion (12) comprennent une même enveloppe étanche au gaz.

5. Elément structurel (10) selon l'une quelconque des revendications précédentes, dans lequel au moins une couche de la pluralité de couches de la première portion (11) et au moins une couche de la pluralité de couches de la deuxième portion (12) comprennent des fentes.

6. Elément structurel (10) selon la revendication 5, dans lequel lesdites fentes s'étendent, dans une position d'utilisation de l'élément structurel (10), dans une direction verticale, constituant des lignes de pliage verticales pour former un ou plusieurs ergots.

7. Elément structurel (10) selon l'une quelconque des revendications 5 et 6, dans lequel lesdites fentes s'étendent, dans une position d'utilisation de l'élément structurel (10), dans une direction horizontale, constituant des lignes de pliage horizontales pour plier horizontalement des portions de l'élément structurel (10).

8. Elément structurel (10) selon l'une quelconque des revendications précédentes, l'élément structurel comprenant en outre une ou plusieurs indentations (113, 123) s'étendant vers l'intérieur dans des parties opposées des première et deuxième portions (11, 12).

9. Elément structurel (10) selon l'une quelconque des revendications précédentes, dans lequel une ou plusieurs couches de la pluralité de couches à l'intérieur de l'enveloppe étanche au gaz sont réalisées en feuilles d'élastomère polyuréthane thermoplastique (PET) totalement revêtues d'un revêtement de polyuréthane thermoplastique (TPU).

10. Elément structurel (10) selon l'une quelconque des revendications précédentes, dans lequel une ou plusieurs couches de la pluralité de couches à l'intérieur de l'enveloppe étanche au gaz comprennent un ou plusieurs des éléments suivants ou des combinaisons de ceux-ci : du polyéthylène basse densité (LDPE), du polyéthylène très basse densité (VLDPE) et un copolymère d'oléfine cyclique (COC).

11. Elément structurel (10) selon l'une quelconque des revendications précédentes, qui comprend en outre des moyens de couplage pour un raccordement à une armature (500) d'un siège auto pour enfant.

12. Siège auto pour enfant multi-groupe (100), comprenant :
- une armature (500), pouvant être couplée à un siège d'un véhicule ;
dans lequel le siège auto pour enfant multi-groupe (100) comprend en outre :
- une structure de siège auto pour enfant (10) selon l'une quelconque des revendications précédentes.

13. Siège auto pour enfant multi-groupe (100) selon la revendication 12, dans lequel la structure de siège auto pour enfant (10) est mise en forme pour se conformer à une partie de dossier et une partie de siège d'un siège auto pour enfant pour le premier ou le deuxième groupe de siège auto pour enfant.

14. Siège auto pour enfant multi-groupe (100) selon l'une quelconque des revendications 12 et 13, qui comprend en outre un nécessaire pneumatique comportant un composant pneumatique et des moyens de traitement, les moyens de traitement étant configurés pour faire fonctionner le composant pneumatique de façon à faire passer la structure de siège auto pour enfant (10) entre le premier état flexible et le deuxième état rigide et vice versa.

15. Siège auto pour enfant multi-groupe (100) selon l'une quelconque des revendications 12 à 14, dans lequel la structure de siège auto pour enfant (10) a une première forme préformée se conformant à un siège auto pour enfant pour le premier groupe de siège auto pour enfant et une deuxième forme préformée se conformant à un siège auto pour enfant pour le deuxième groupe de siège auto pour enfant.
